# FASCICULE DE BREVET EUROPEEN

(11) **EP 2 277 095 B1**
(45) Date de publication et mention de la délivrance du brevet: **09.09.2020**
(21) Numéro de dépôt: 09735933.5
(22) Date de dépôt: 20.04.2009
(51) Int. Cl.: G06F 3/01, H01H 13/85

(54) **ACTIONNEUR ELECTROMAGNETIQUE ET DISPOSITIF DE COMMANDE A RETOUR HAPTIQUE CORRESPONDANT**
ELEKTROMAGNETISCHER BETÄTIGER UND ENTSPRECHENDE STEUERUNG MIT HAPTISCHER RÜCKKOPPELUNG
ELECTROMAGNETIC ACTUATOR AND CORRESPONDING CONTROL DEVICE WITH HAPTIC FEEDBACK

(30) Priorité: 25.04.2008 FR 0802323
(43) Date de publication de la demande: 26.01.2011
(73) Titulaire: DAV, 94000 Creteil (FR)
(72) Inventeur: MARIE, Bruno, F-74106 Annemasse (FR)
(74) Mandataire: Croonenbroek, Thomas Jakob
(86) Numéro de dépôt international: PCT/EP2009/054681
(87) Numéro de publication internationale: WO 2009/130188

(56) Documents cités:
- US-A- 5 189 660
- US-A1- 2005 017 947
- US-B1- 6 982 696
- US-B2- 7 450 110

## Description

La présente invention concerne un actionneur électromagnétique destiné à être monté dans un dispositif de commande permettant notamment de transmettre un retour haptique à un utilisateur, tel qu'un retour vibratoire. L'invention concerne également un tel dispositif de commande.

Dans le domaine automobile, des dispositifs de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels dispositifs peuvent être associés à un écran d'affichage et permettre une navigation dans des menus déroulants comportant différentes commandes relatives aux systèmes à commander.

Pour augmenter le confort ergonomique, l'utilisation d'une technologie à capteur à surface tactile au niveau de la surface de commande de tels dispositifs de commande peut être considérée comme un développement intéressant.

Lorsqu'un utilisateur exerce une pression sur la surface tactile d'un tel capteur, on peut mesurer la pression appliquée et/ou déterminer la localisation de l'endroit où la pression est exercée par application d'une tension électrique adaptée. Dans ce cas, un appui de l'utilisateur sur la surface tactile est par exemple associé à la sélection d'une commande.

En outre, pour signaler à l'utilisateur que sa commande a bien été prise en compte, notamment en conduite de nuit ou lors d'une manipulation en aveugle, il est important que l'utilisateur ait un retour haptique de manière à rester concentré sur la route.

Pour cela, on connaît déjà des dispositifs de commande à retour haptique comportant des actionneurs électromagnétiques, reliés à une plaque du capteur à surface tactile pour transmettre un mouvement de vibration à la plaque, de manière que l'utilisateur perçoive un retour haptique l'informant que sa commande a bien été prise en compte.

Les documents US7450110, US6982696, US5189660 et US2005/017947 montrent à titre d'exemple de telles structures d'actionneurs électromagnétiques.

L'invention a pour objet un dispositif de commande à retour haptique tel que défini dans les revendications annexées.

D'autres caractéristiques et avantages de l'invention ressortiront de la description suivante, donnée à titre d'exemple, sans caractère limitatif, en regard des dessins annexés sur lesquels :
- la figure 1 représente un premier mode de réalisation d'un dispositif de commande comportant au moins un actionneur selon l'invention,
- la figure 2a illustre un actionneur selon l'invention,
- la figure 2b est une vue en perspective de l'actionneur de la figure 2a, et
- la figure 3 représente un second mode de réalisation du dispositif de commande, et
- la figure 4 est un schéma représentant des éléments du dispositif de commande.

L'invention concerne un dispositif de commande à retour haptique pouvant transmettre un retour haptique à un utilisateur ayant par exemple modifié ou sélectionné une commande.

Le retour haptique, par exemple de type vibratoire, permet d'assurer à l'utilisateur la prise en compte de la commande modifiée ou sélectionnée.

Un tel dispositif de commande peut par exemple être agencé dans un tableau de commande de véhicule automobile, ou encore une console centrale de véhicule automobile, pour commander des systèmes électriques ou électroniques du véhicule.

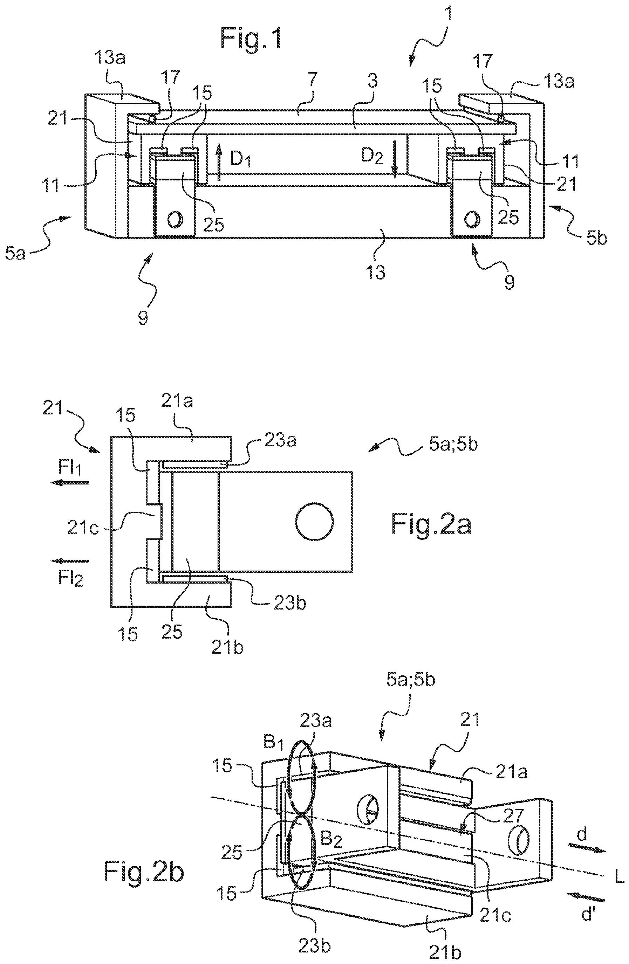

La figure 1 représente un tel dispositif de commande 1 comportant une plaque 3 pour transmettre un retour haptique à un utilisateur et deux actionneurs 5a,5b reliés à la plaque 3 pour générer le retour haptique. Bien entendu, on peut prévoir un seul ou plusieurs actionneurs.

La plaque 3 porte un capteur 7 à surface tactile, par exemple un capteur de pression utilisant la technologie FSR pour "Force Sensing Resistor" en anglais, c'est-à-dire utilisant des résistances sensibles à la pression. Ce capteur 7 permet de détecter un appui, par exemple d'un doigt de l'utilisateur, sur la surface tactile.

On peut également choisir un capteur utilisant une technologie capacitive ou optique pour détecter un appui de l'utilisateur.

Une peau de protection et de décoration (non représentée) peut être disposée sur le capteur 7 à surface tactile.

Les deux actionneurs 5a,5b sont par exemple disposés au niveau de deux côtés opposés de la plaque 3 pour une meilleure répartition des efforts appliqués à la plaque 3.

Chaque actionneur 5a,5b est électromagnétique et comprend une partie fixe 9 et une partie mobile 11 reliée à la plaque 3.

On peut prévoir des trous taraudés sur la partie fixe 9 pour coopérer avec des moyens de fixations complémentaires d'un châssis 13 fixe du dispositif 1. Bien entendu, on peut envisager d'autres moyens de fixation de la partie fixe 9 sur le châssis 13.

La partie fixe 9 est disposée en regard de la partie mobile 11 de manière à délimiter un entrefer entre la partie fixe 9 et la partie mobile 11. La partie mobile 11 est configurée pour être entraînée en translation dans l'entrefer de manière à générer le retour haptique.

Un élément élastique 15 peut alors être agencé dans l'entrefer, pour guider le mouvement de la partie mobile 11. L'élément élastique 15 amortit le mouvement de la partie mobile 11 et évite tout contact physique entre la partie fixe 9 et la partie mobile 11, limitant ainsi le bruit généré lors du mouvement de la partie mobile 11.

Cet élément élastique 15 peut être en élastomère ou en silicone et peut être surmoulé sur la partie fixe 9 et la partie mobile 11.

De manière à être compatible aux normes automobiles, pour lesquelles les retours haptiques dans un tel dispositif de commande 1 nécessitent de très petits déplacements, l'élément élastique 15 peut présenter à titre d'exemple une épaisseur de l'ordre de 2 mm.

En outre, les actionneurs électromagnétiques 5a,5b peuvent être disposés de manière à entraîner la plaque 3 en mouvement selon une direction sensiblement horizontale par rapport à la plaque 3.

En alternative (figure 1), les actionneurs électromagnétiques 5a,5b sont disposés de manière à entraîner la plaque 3 en mouvement selon une direction D1 ou D2 sensiblement verticale par rapport à la plaque 3, c'est à dire perpendiculaire au plan défini par la plaque 3.

Dans ce cas, on peut prévoir un moyen d'étanchéité 17 interposé entre la plaque 3 et une partie 13a du châssis 13. Ce moyen d'étanchéité 17 peut par exemple être réalisé en matériau élastique, tel qu'en élastomère ou en silicone. Ce moyen d'étanchéité 17 forme également un amortisseur du mouvement de la plaque selon la direction D1 ou D2.

Ainsi, le mouvement de la plaque 3 est délimité d'une part par l'élément élastique 15 entre les parties fixe 9 et mobile 11 des actionneurs électromagnétiques 5a et 5b, et d'autre part par le moyen d'étanchéité 17.

Comme mieux visible sur les figures 2a et 2b, un actionneur électromagnétique 5a,5b comporte une structure ferromagnétique 21, par exemple en fer doux, qui porte deux aimants 23a,23b et une bobine 25 disposée entre les deux aimants 23a,23b.

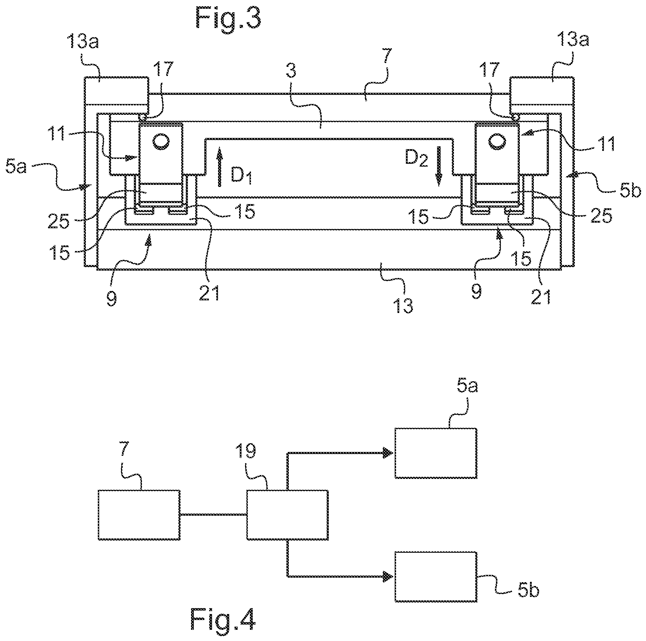

La structure ferromagnétique 21 portant les deux aimants 23a,23b peut être portée par la partie mobile 11 de l'actionneur électromagnétique 5a,5b (voir figure 1) ou en variante par la partie fixe 9 de l'actionneur électromagnétique 5a,5b (voir figure 3).

De même, la bobine 25 peut être portée par la partie fixe 9 de l'actionneur électromagnétique 5a,5b (voir figure 1) ou en variante par la partie mobile 11 de l'actionneur électromagnétique 5a,5b (voir figure 3).

Dans le mode de réalisation illustré sur la figure 3, la forme de la plaque 3 est adaptée pour être fixée à la partie mobile 11 portant la bobine 25. Plus précisément, la plaque 3 présente à ses extrémités deux prolongements qui viennent se fixer sur les parties mobiles 11.

En se référant à nouveau aux figures 2a,2b, les deux aimants 23a,23b sont des aimants permanents de même polarité disposés en vis-à-vis de manière à générer un premier B1 et un second B2 champs magnétiques opposés.

Dans l'exemple illustré, la structure 21 présente une forme générale sensiblement en E, avec deux branches extérieures 21a,21b et une branche centrale 21c.

Dans ce cas, on prévoit un élément élastique 15 dans chaque entrefer délimité par une branche extérieure 21a,21b et la branche centrale 21c.

Les branches extérieures 21a,21b portent respectivement un aimant 23a,23b. À cet effet, les aimants 23a,23b présentent une forme sensiblement plate et s'étendent respectivement le long des branches extérieures 21a,21b.

La branche centrale 21c s'engage dans une ouverture 27 prévue dans le corps de la bobine 25, la branche centrale 21c formant ainsi un support pour l'enroulement de la bobine 25 qui traverse alors successivement les deux champs magnétiques opposés B1 et B2. Cette branche centrale 21c assure ainsi en outre le guidage mécanique de la translation de la partie mobile 11.

Comme l'illustre de façon schématique la figure 2b, l'enroulement de la bobine 25 est selon l'axe longitudinal L de l'actionneur électromagnétique 5a,5b de façon perpendiculaire aux champs magnétiques B1 et B2 créés par les aimants 23a,23b, de manière à générer une translation de la plaque 3 selon la direction D1 ou D2 perpendiculaire à la fois à l'axe longitudinal L et aux champs B1,B2.

En effet, l'alimentation en courant de la bobine 25 d'un actionneur électromagnétique 5a,5b selon une première direction d perpendiculaire au premier champ magnétique B1 créé par l'aimant 23a, au niveau de la partie supérieure de l'enroulement, génère une force de Laplace Fl1 perpendiculaire à la fois au premier champ magnétique B1 et à la direction d. De même, l'alimentation en courant de la bobine 25 selon une deuxième direction d' opposée à la première direction d et perpendiculaire au second champ magnétique B2 créé par l'aimant 23b, au niveau de la partie inférieure de l'enroulement, génère une force de Laplace Fl2 perpendiculaire à la fois au second champ magnétique B2 et à la direction d'. Les deux forces de Laplace Fl1 et Fl2 générées sont orientées selon une direction d'entraînement commune D1 et sont cumulées de sorte que la force résultante d'actionnement entraîne la partie mobile 11 en translation dans l'entrefer pour déplacer la plaque 3 selon la direction D1.

Un tel actionneur 5a ou 5b, permet de générer une force d'actionnement alternativement selon deux directions opposées.

De façon similaire, l'alimentation en courant de la bobine 25 d'un actionneur électromagnétique 5a,5b permet de déplacer la plaque 3 en translation selon la direction D2, en inversant le sens de circulation du courant.

On peut prévoir encore que le dispositif 1 comporte au moins un actionneur passif présentant une forme générale sensiblement similaire à l'actionneur électromagnétique 5a,5b. On entend par « actionneur passif » le fait que cet actionneur ne comporte pas de moyen d'actionnement pour entraîner la partie mobile 11 en translation dans l'entrefer de manière à générer le retour haptique.

Cet actionneur passif sert de guidage de la plaque 3 lorsque le retour haptique est généré par le ou les actionneurs électromagnétiques 5a,5b. Le dispositif 1 ne nécessite alors plus de moyen de guidage supplémentaire pouvant être à l'origine de problème hyperstatique tendant à faire diminuer le rendement global du dispositif 1.

Par ailleurs, le dispositif 1 peut comporter une unité de pilotage 19 (figure 4) reliée au capteur 7 à surface tactile et aux actionneurs électromagnétiques 5a,5b pour fournir un signal de commande indépendant à chaque actionneur 1 de façon à entraîner la plaque 3 en mouvement, lorsqu'un appui est détecté sur la surface tactile. Le signal de commande peut être carré ou sinusoïdal.

On peut prévoir que cette unité 19 pilote les actionneurs 5a,5b en fonction de la position de l'appui détecté sur la surface tactile, plus précisément en fonction de signaux de position issus du capteur 7.

L'unité 19 peut par exemple fournir un signal d'alimentation périodique à chaque actionneur électromagnétique 5a,5b, les signaux d'alimentation étant déphasés. Le déphasage peut être adapté à la position de l'appui détecté.

Selon une variante de réalisation, les signaux d'alimentation sont déphasés de 180° de sorte que lorsque l'actionneur électromagnétique 5a dirige la plaque 3 dans la direction D1, l'actionneur électromagnétique 5b dirige la plaque 3 dans la direction D2 opposée à la direction D1 (voir figures 1 et 3).

Un tel pilotage en opposition de phase des deux actionneurs électromagnétiques 5a,5b joue un effet bascule qui permet pratiquement de doubler l'accélération et donc d'amplifier la puissance mécanique pour générer le retour haptique. De plus étant donnée la faible course de déplacement de la partie mobile 11, l'utilisateur ressent un retour haptique uniforme malgré l'effet bascule.

On peut prévoir un nombre pair d'actionneurs disposés en vis-à-vis deux à deux et dont les signaux d'alimentation sont inversés deux à deux.

Selon une alternative, l'unité 19 peut commander l'application de niveaux de tension différents aux bornes de chaque actionneur 1.

Bien entendu, lors d'un déplacement du doigt sur la surface tactile, on peut prévoir que l'unité 19 adapte les signaux de commande en fonction de la position du doigt sur la surface tactile.

Ainsi, le retour haptique peut être généré premièrement par exemple avec un pilotage en opposition de phase selon deux directions opposées, puis par un pilotage simultané selon une direction commune lorsque le doigt arrive au centre de la surface tactile, et inversement.

On comprend donc qu'un dispositif de commande 1 comportant un tel actionneur électromagnétique 5a,5b permet de générer de façon améliorée un retour haptique à un utilisateur dans un plan horizontal ou vertical par rapport à la plaque 3 de support de la surface tactile.

## Revendications

1. Dispositif de commande à retour haptique comportant :
- une plaque (3) pour transmettre un retour haptique à un utilisateur,
- un capteur (7) à surface tactile porté par ladite plaque, configuré pour détecter un appui de l'utilisateur sur la surface tactile, et
- au moins un actionneur électromagnétique (5a,5b) relié à ladite plaque (3) et configuré pour entraîner ladite plaque (3) en mouvement lorsqu'un appui est détecté sur la surface tactile de manière à générer le retour haptique, ledit actionneur (5a,5b) comportant une partie fixe (9) et une partie mobile (11), lesdites parties fixe (9) et mobile (11) formant un circuit magnétique définissant au moins un entrefer entre lesdites parties fixe (9) et mobile (11),
**caractérisé en ce que** ledit actionneur (5a,5b) comporte en outre :
- au moins deux aimants permanents (23a,23b) générant respectivement un premier (B1) et un second (B2) champs magnétiques opposés, et
- une bobine (25) électrique disposée entre lesdits aimants (23a,23b) telle que l'enroulement de ladite bobine (25) traverse successivement lesdits premier (B1) et second (B2) champs magnétiques opposés,
de sorte que lorsque ladite bobine (25) est parcourue par un courant, ledit actionneur (5a,5b) est soumis à une force résultante d'actionnement selon une direction d'entraînement commune pour entraîner ladite partie mobile (11) en translation dans ledit entrefer.

2. Dispositif selon la revendication 1, **caractérisé en ce que** lesdits aimants (23a,23b) sont disposés en vis-à-vis.

3. Dispositif selon l'une des revendications 1 ou 2, **caractérisé en ce que** lesdits aimants (23a,23b) sont portés par la partie fixe (9) dudit actionneur (5a,5b) et **en ce que** ladite bobine (25) est portée par la partie mobile (11) dudit actionneur (5a,5b).

4. Dispositif selon l'une des revendications 1 ou 2, **caractérisé en ce que** lesdits aimants (23a,23b) sont portés par la partie mobile (11) dudit actionneur (5a,5b) et **en ce que** ladite bobine (25) est portée par la partie fixe (9) dudit actionneur (5a,5b).

5. Dispositif selon l'une quelconque des revendications 1 à 4, **caractérisé en ce que** la partie dudit actionneur (5a,5b) portant lesdits aimants (23a,23b) présente une forme générale sensiblement en E, dont les branches extérieures (21a,21b) portent respectivement un aimant permanent (23a,23b) et **en ce que** la partie dudit actionneur (5a,5b) portant ladite bobine (25) présente une ouverture (27) dans laquelle s'engage la branche centrale (21c) dudit actionneur (5a, 5b).

6. Dispositif selon l'une quelconque des revendications précédentes, **caractérisé en ce que** la partie dudit actionneur (5a,5b) portant lesdits aimants (23a,23b) est réalisée en matériau ferromagnétique.

7. Dispositif selon l'une quelconque des revendications précédentes, **caractérisé en ce que** ledit actionneur (5a,5b) comporte un amortisseur (15) dans ledit entrefer entre lesdites parties fixe (9) et mobile (11).

8. Dispositif selon l'une quelconque des revendications précédentes, **caractérisé en ce que** ledit dispositif comporte au moins deux actionneurs (5a,5b) et une unité de traitement (19) reliée audit capteur (7) et configurée pour piloter simultanément et indépendamment lesdits actionneurs (5a,5b) lorsqu'un appui est détecté sur ladite surface tactile.

9. Dispositif selon l'une quelconque des revendications précédentes, **caractérisé en ce que** ledit actionneur (5a,5b) est configuré pour entraîner ladite plaque (3) selon une direction (D1,D2) sensiblement perpendiculaire au plan défini par ladite plaque (3).

10. Dispositif selon la revendication 8 prise en combinaison avec la revendication 1, **caractérisé en ce que** l'unité de traitement (19) est configurée pour fournir indépendamment à chaque actionneur (5a,5b) un signal d'alimentation périodique, lesdits signaux d'alimentation étant déphasés 180° de sorte que lesdits actionneurs (5a,5b) entraînent simultanément ladite plaque dans deux directions (D1,D2) opposées.

11. Dispositif selon l'une quelconque des revendications précédentes, **caractérisé en ce qu'**il comporte un moyen de guidage de ladite plaque formé par au moins un actionneur passif présentant une forme générale sensiblement correspondante à celle dudit actionneur électromagnétique (5a,5b).

## Patentansprüche

1. Bedienvorrichtung mit haptischer Rückkopplung, umfassend:
- eine Platte (3) zum Übertragen einer haptischen Rückkopplung an einen Benutzer,
- einen Sensor (7) mit berührungsempfindlicher Oberfläche, der von der Platte getragen wird und dazu ausgestaltet ist, ein Drücken des Benutzers auf die berührungsempfindliche Oberfläche zu detektieren, und
- mindestens einen elektromagnetischen Aktor (5a, 5b), der mit der Platte (3) verbunden ist und dazu ausgestaltet ist, die Platte (3) zu einer Bewegung anzutreiben, wenn ein Drücken auf die berührungsempfindliche Oberfläche detektiert wird, so dass eine haptische Rückkopplung erzeugt wird, wobei der Aktor (5a, 5b) ein feststehendes Teil (9) und ein bewegliches Teil (11) umfasst, wobei das feststehende Teil (9) und das bewegliche Teil (11) einen Magnetkreis bilden, der mindestens einen Spalt zwischen dem feststehenden Teil (9) und dem beweglichen Teil (11) definiert,
**dadurch gekennzeichnet, dass** der Aktor (5a, 5b) ferner umfasst:
- mindestens zwei Permanentmagnete (23a, 23b), die ein erstes (B1) bzw. ein zweites (B2) Magnetfeld erzeugen, die entgegengesetzt gerichtet sind, und
- eine elektrische Spule (25), die zwischen den Magneten (23a, 23b) angeordnet ist, so dass die Wicklung der Spule (25) nacheinander das erste (B1) und das zweite (B2) Magnetfeld, die entgegengesetzt gerichtet sind, durchdringt,
so dass, wenn die Spule (25) von einem Strom durchflossen wird, der Aktor (5a, 5b) einer resultierenden Betätigungskraft entlang einer gemeinsamen Antriebsrichtung ausgesetzt ist, um das bewegliche Teil (11) in dem Spalt translatorisch anzutreiben.

2. Vorrichtung nach Anspruch 1, **dadurch gekennzeichnet, dass** die Magnete (23a, 23b) einander gegenüber angeordnet sind.

3. Vorrichtung nach einem der Ansprüche 1 oder 2, **dadurch gekennzeichnet, dass** die Magnete (23a, 23b) vom feststehenden Teil (9) des Aktors (5a, 5b) getragen werden und dass die Spule (25) vom beweglichen Teil (11) des Aktors (5a, 5b) getragen wird.

4. Vorrichtung nach einem der Ansprüche 1 oder 2, **dadurch gekennzeichnet, dass** die Magnete (23a, 23b) vom beweglichen Teil (11) des Aktors (5a, 5b) getragen werden und dass die Spule (25) vom feststehenden Teil (9) des Aktors (5a, 5b) getragen wird.

5. Vorrichtung nach einem der Ansprüche 1 bis 4, **dadurch gekennzeichnet, dass** der Teil des Aktors (5a, 5b), der die Magnete (23a, 23b) trägt, im Wesentlichen die Grundform eines E aufweist, dessen äußere Schenkel (21a, 21b) jeweils einen Permanentmagneten (23a, 23b) tragen, und dass der Teil des Aktors (5a, 5b), der die Spule (25) trägt, eine Öffnung (27) aufweist, in die der mittlere Schenkel (21c) des Aktors (5a, 5b) eingeführt ist.

6. Vorrichtung nach einem der vorhergehenden Ansprüche, **dadurch gekennzeichnet, dass** der Teil des Aktors (5a, 5b), der die Magnete (23a, 23b) trägt, aus ferromagnetischem Material ausgeführt ist.

7. Vorrichtung nach einem der vorhergehenden Ansprüche, **dadurch gekennzeichnet, dass** der Aktor (5a, 5b) einen Dämpfer (15) in dem Spalt zwischen dem feststehenden Teil (9) und dem beweglichen Teil (11) umfasst.

8. Vorrichtung nach einem der vorhergehenden Ansprüche, **dadurch gekennzeichnet, dass** die Vorrichtung mindestens zwei Aktoren (5a, 5b) und eine Verarbeitungseinheit (19) umfasst, die mit dem Sensor (7) verbunden ist und dazu ausgestaltet ist, die Aktoren (5a, 5b) gleichzeitig und unabhängig anzusteuern, wenn ein Drücken auf die berührungsempfindliche Oberfläche detektiert wird.

9. Vorrichtung nach einem der vorhergehenden Ansprüche, **dadurch gekennzeichnet, dass** der Aktor (5a, 5b) dazu ausgestaltet ist, die Platte (3) entlang einer Richtung (D1, D2) anzutreiben, die im Wesentlichen senkrecht zu der durch die Platte (3) definierten Ebene verläuft.

10. Vorrichtung nach Anspruch 8 in Kombination mit Anspruch 1, **dadurch gekennzeichnet, dass** die Verarbeitungseinheit (19) dazu ausgestaltet ist, an jeden Aktor (5a, 5b) unabhängig ein periodisches Speisesignal abzugeben, wobei die Speisesignale um 180° phasenverschoben sind, so dass die Aktoren (5a, 5b) die Platte gleichzeitig in zwei entgegengesetzte Richtungen (D1, D2) antreiben.

11. Vorrichtung nach einem der vorhergehenden Ansprüche, **dadurch gekennzeichnet, dass** sie ein Mittel zum Führen der Platte umfasst, das durch mindestens einen passiven Aktor gebildet wird, der eine Grundform aufweist, die im Wesentlichen der des elektromagnetischen Aktors (5a, 5b) entspricht.

## Claims

1. Control device with haptic feedback comprising:
- a plate (3) for transmitting a haptic feedback to a user,
- a tactile-surface sensor (7) carried by said plate, configured to detect a press on the tactile surface by the user, and
- at least one electromagnetic actuator (5a,5b) linked to said plate (3) and configured to drive said plate (3) in motion when a press is detected on the tactile surface so as to generate the haptic feedback, said actuator (5a, 5b) comprising a fixed part (9) and a mobile part (11), said fixed (9) and mobile (11) parts forming a magnetic circuit defining at least one air gap between said fixed (9) and mobile (11) parts,
**characterized in that** said actuator (5a,5b) furthermore comprises:
- at least two permanent magnets (23a,23b) generating respectively a first (B1) and a second (B2) opposite magnetic fields, and
- an electric coil (25) disposed between said magnets (23a,23b) such that the winding of said coil (25) successively crosses said first (B1) and second (B2) opposite magnetic fields,
so that when said coil (25) is traversed by a current, said actuator (5a,5b) is subjected to a resultant actuation force along a common drive direction so as to drive said mobile part (11) in translation in said air gap.

2. Device according to Claim 1, **characterized in that** said magnets (23a,23b) are disposed facing one another.

3. Device according to either of Claims 1 and 2, **characterized in that** said magnets (23a,23b) are carried by the fixed part (9) of said actuator (5a,5b) and **in that** said coil (25) is carried by the mobile part (11) of said actuator (5a,5b).

4. Device according to either of Claims 1 and 2, **characterized in that** said magnets (23a,23b) are carried by the mobile part (11) of said actuator (5a,5b) and **in that** said coil (25) is carried by the fixed part (9) of said actuator (5a,5b).

5. Device according to any one of Claims 1 to 4, **characterized in that** the part of said actuator (5a,5b) carrying said magnets (23a,23b) exhibits a substantially E-shaped general form, the outer branches (21a,21b) of which carry respectively a permanent magnet (23a,23b) and **in that** the part of said actuator (5a,5b) carrying said coil (25) exhibits an opening (27) in which the central branch (21c) of said actuator (5a, 5b) engages.

6. Device according to any one of the preceding claims, **characterized in that** the part of said actuator (5a,5b) carrying said magnets (23a,23b) is made of ferromagnetic material.

7. Device according to any one of the preceding claims, **characterized in that** said actuator (5a,5b) comprises a damper (15) in said air gap between said fixed (9) and mobile (11) parts.

8. Device according to any one of the preceding claims, **characterized in that** said device comprises at least two actuators (5a,5b) and a processing unit (19) linked to said sensor (7) and configured to simultaneously and independently drive said actuators (5a,5b) when a press is detected on said tactile surface.

9. Device according to any one of the preceding claims, **characterized in that** said actuator (5a,5b) is configured to drive said plate (3) along a direction (D1,D2) substantially perpendicular to the plane defined by said plate (3).

10. Device according to Claim 8 taken in combination with Claim 1, **characterized in that** the processing unit (19) is configured to independently provide a periodic supply signal to each actuator (5a,5b), said supply signals being 180° phase-shifted so that said actuators (5a,5b) simultaneously drive said plate in two opposite directions (D1,D2).

11. Device according to any one of the preceding claims, **characterized in that** it comprises a guidance means for said plate, formed by at least one passive actuator exhibiting a general shape substantially corresponding to that of said electromagnetic actuator (5a,5b).
